# EUROPÄISCHE PATENTSCHRIFT

(11) **EP 2 095 302 B1**
(45) Veröffentlichungstag und Bekanntmachung des Hinweises auf die Patenterteilung: **18.07.2012**
(21) Anmeldenummer: 07819017.0
(22) Anmeldetag: 16.10.2007
(51) Int. Cl.: G06K 19/077, B31D 1/02

(54) **SELBSTKLEBENDES RFID-ETIKETT UND VERFAHREN ZU SEINER HERSTELLUNG**
SELF-ADHESIVE RFID-LABEL AND METHOD FOR THE PRODUCTION THEREOF
ÉTIQUETTE RFID AUTOCOLLANTE ET PROCÉDÉ DE FABRICATION

(30) Priorität: 06.11.2006 DE 102006052516
(43) Veröffentlichungstag der Anmeldung: 02.09.2009
(73) Patentinhaber: Bielomatik Leuze Gmbh + Co. Kg, 72639 Neuffen (DE)
(72) Erfinder: BOHN, Martin, 71762 Reutlingen (DE)
(74) Vertreter: Thul, Hermann
(86) Internationale Anmeldenummer: PCT/EP2007/008947
(87) Internationale Veröffentlichungsnummer: WO 2008/055578

(56) Entgegenhaltungen:
- EP-A- 1 018 703
- WO-A-2005/076206
- WO-A-2006/068688

## Beschreibung

Die Erfindung betrifft ein selbstklebendes RFID-Etikett gemäß dem Oberbegriff des Patentanspruchs 1 und ein Verfahren zu seiner Herstellung.

Es sind selbstklebende RFID-Etiketten bekannt, die ein bedruckbares, bahn- oder bogenförmiges Deckmaterial enthalten, das an seiner Rückseite mit einer Haftkleberschicht versehen ist. Die Haftkleberschicht des Deckmaterials wird von einem Trägermaterial abgedeckt, das zum Aufkleben des Etiketts abziehbar ist. Zwischen dem Deckmaterial und dem Trägermaterial ist ein RFID-Inlay angeordnet, das aus einem bahn- oder bogenförmigen, auf der Rückseite mit einer Haftkleberschicht versehenen Inlay-Material besteht und auf dessen Oberseite ein RFID-Chip und eine RFID-Antenne angeordnet sind. Das RFID-Inlay ist mit seiner Oberseite an der Haftkleberschicht des Deckmaterials festgeklebt. Ein derartiges RFID-Etikett und ein Verfahren zu seiner Herstellung ist in der WO 2005/076206 A1 beschrieben.

Die RFID-Etiketten werden bekannter Weise kontinuierlich aus bahnförmigem Etikettenmaterial hergestellt, dem die ebenfalls unter Verwendung von bahnförmigen Material kontinuierlich hergestellten RFID-Inlays kontinuierlich zugeführt werden. Dazu werden die RFID-Inlays als selbstklebende Inlays auf einem bahnförmigen Trägermaterial angeordnet. Bei der Herstellung werden auf dem als Deckmaterial gestalteten Inlay-Material Abschnitte ausgestanzt, die auf ihrer Oberseite jeweils einen Transponder (RFID-Chip mit RFID-Antenne) tragen. Diese mit Abstand hintereinander auf einem bahnförmigen Trägermaterial aufgeklebten RFID-Inlays können entweder zu Rollen zwischengewickelt oder direkt der RFID-Etiketten-Herstellung zugeführt werden. Beim Einlegen zwischen dem Deck- und Trägermaterial des RFID-Etiketts werden die RFID-Inlays von ihrem Trägermaterial abgezogen und so auch vereinzelt. Da die RFID-Inlays mit ihrer Oberseite an der Haftkleberschicht des Deckmaterials festgeklebt werden und an ihrer Rückseite mit einer Haftkleberschicht versehen sind, wird ein RFID-Etikett mit einer durchgehenden Haftkleberschicht gebildet, die zum Einen aus der Haftkleberschicht des Deckmaterials, zum Anderen aus der Haftkleberschicht des RFID-Inlays gebildet wird.

Bei den bekannten RFID-Etiketten werden die RFID-Inlays unter Verwendung einer Antennenfolie hergestellt, auf der die Antennen aufgedruckt oder ausgeätzt sind. Ist das RFID-Inlay als Selbstklebe-Inlay gestaltet, so weist die Antennenfolie auf ihrer Rückseite eine eigene Haftkleberschicht auf. Diese Haftkleberschicht muss dem Material der Antennenfolie, beispielsweise PET, angepasst sein. Sie ist somit eine andere Haftkleberschicht, als die Haftkleberschicht an der Rückseite des Deckmaterials für das RFID-Etikett.

Aus der WO 2006/068888 A1 ist ein RFID-Etikett und ein Verfahren zu seiner Herstellung bekannt, bei dem ein RFID-Chip und eine RFID-Antenne auf der Vorderseite eines Antennensubstrats angeordnet sind, das auf seiner Rückseite eine Klebstoffschicht aufweist. Die Vorderseite des Antennensubstrats mit der RFID-Antenne ist an der Rückseite eines Deckmaterials mittels einer dort befindlichen Klebstoffschicht festgeklebt. Das RFID-Etikett ist zur Befestigung an einem Behälter aus Karton vorgesehen. Damit es mit diesem recycelt werden kann, sind das Deckmaterial und das Antennenmeterial ebenso wie die beiden Klebstoffschichten aus einem Material hergestellt, das die Pulpe beim Recycein des Behälters nicht stört oder leicht aus dieser zu entfernen ist. Als Materialien für die Substrate sind Papiere und Polymerfilme angegebene.

Der Erfindung liegt somit die Aufgabe zugrunde, ein selbstklebendes RFID-Etikett der gattungsgemäßen Art zu schaffen, das sich vereinfacht herstellen lässt.

Diese Aufgabe wird nach der Erfindung dadurch gelöst, dass für das Inlay-Material des RFID-Inlays, einschließlich dessen Haftkleberschicht, dasselbe Material verwendet wird, wie für das Deckmaterial mit Haftkleberschicht des Etiketts.

Nach der Erfindung braucht somit kein eigenes Inlay-Material für das RFID-Inlay vorgehalten werden. Es kann für das Inlay ein Anteil des Etikettenmaterials abgetrennt werden.

Als weiterer Vorteil tritt hinzu, dass die beiden Haftkleberschichten des Etiketts und des Inlays dieselben sind. Bei dem fertigen RFID-Etikett besteht somit eine durchgehende Haftkleberschicht aus dem Haftkleber für das Etikett. Es ist somit ausgeschlossen, dass beim Aufkleben des Etiketts Störungen auftreten, die durch einen anderen Haftkleber für das RFID-Inlay verursacht werden, zum Beispiel weil das andersartige Antennenmaterial einen anderen Haftkleber verlangt.

Bevorzugt sind die RFID-Antennen mit Abstand voneinander auf der Oberseite des Inlay-Materials aufgedruckt. So brauchen die RFID-Antennen bei der Herstellung des RFID-Inlays nicht gesondert zugeführt zu werden.

Der RFID-Chip kann auf verschiedene Weise mit der Antenne verbunden werden. So können die Chips als Chipmodul mit ihren elektrischen Anschlusskontakten auf Streifen (so genannte Straps) mit Abstand angeordnet sein. Jedes Chipmodul wird dann abgetrennt und auf der RFID-Antenne befestigt, wobei der elektrische Kontakt mit der RFID-Antenne galvanisch über leitfähige Kleber oder kapazitiv erfolgt.

Alternativ ist es möglich, wie in der WO 2005/076206 A1 beschrieben, die Chipmodule mit ihren Anschlusskontakten auf sogenanntem Interposer-Material zu befestigen. Das Interposer-Material besteht aus Haftfolienabschnitten, deren Grundfläche wesentlich größer ist als die Grundfläche eines Chipmoduls und eine entsprechend große Haftkleberschicht aufweist. Das Interposer-Material mit dem aufgeklebten Chipmodul wird so auf die auf dem Inlay-Material befindliche RFID-Antenne aufgeklebt, dass die Anschlusskontakte des RFID-Chips in Kontakt mit der auf dem Inlay-Material befindlichen RFID-Antenne treten.

Bei einer besonders vorteilhaften Ausführungsform besteht das Chipmodul aus einem auf einem Trägermaterial angeordneten RFID-Chip und einer mit dem RFID-Chip elektrisch verbundenen Koppelantenne, die auf einem Trägermaterial angeordnet sind. Das Chipmodul wird auf die RFID-Antenne aufgeklebt und dabei so zu dieser positioniert, dass die Koppelantenne des Chipmoduls und die RFID-Antenne induktiv gekoppelt sind.

Patentanspruch 5 beansprucht die Herstellung eines selbstklebenden RFID-Etiketts nach der Erfindung. Die Unteransprüche 6 bis 10 enthalten bevorzugte, da besonders vorteilhafte Varianten eines erfindungsgemäßen Verfahrens.

Die Zeichnungen dienen zur Erläuterung anhand vereinfacht dargestellter Ausführungsbeispiele.
- Figur 1 zeigt: einen Schnitt eines RFID-Etiketts nach der Erfindung,
- Figur 2 zeigt: eine andere Ausführungsform, bei der ein auf Interposer-Material befestigtes Chipmodul verwendet wird,
- Figur 3 zeigt: eine weitere Ausführungsform, bei der ein Chipmodul mit einer Koppelantenne verwendet wird,
- Die Figuren 4 bis 7: zeigen den Herstellungsprozess für ein erfindungsgemäßes RFID-Etikett, wobei

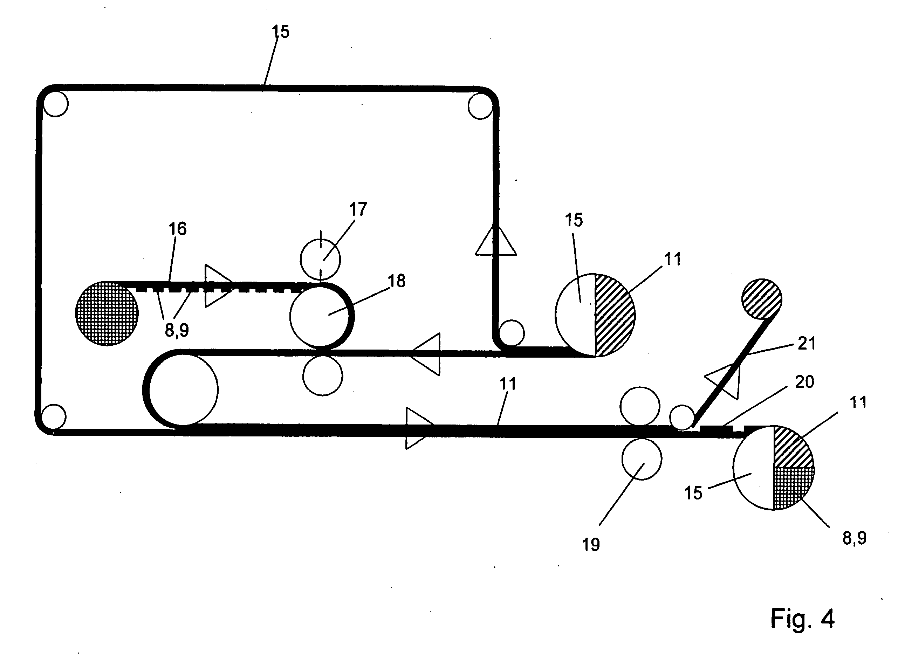

- Figur 4: als ersten Schritt die Herstellung vom Interposerlabel als Vorstufe für ein RFID-Inlay zeigt,

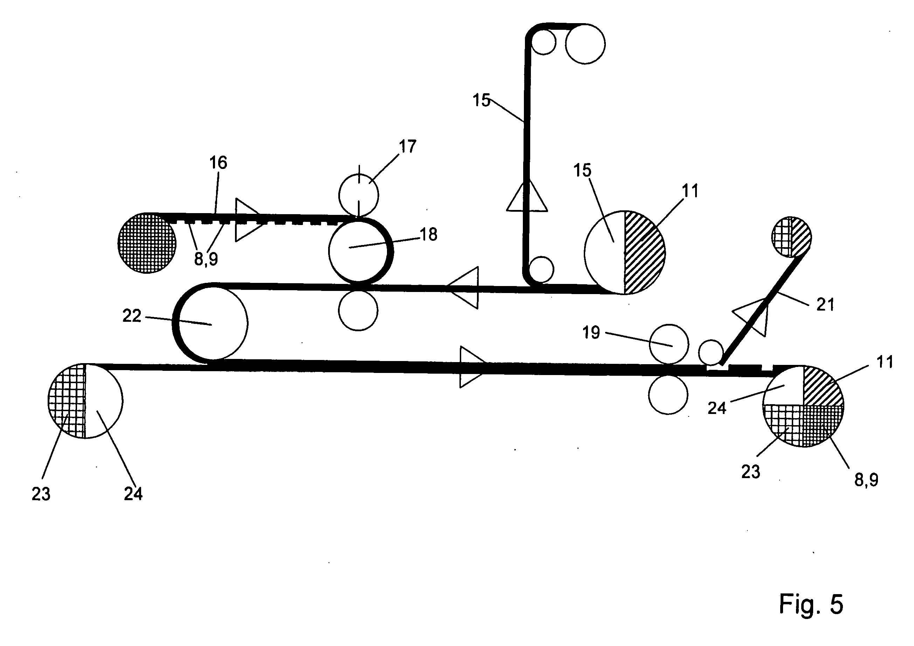

- Figur 5 zeigt: die Herstellung eines RFID-Inlays aus einem selbstklebenden Antennenmaterial und einem endlosen Interposer-Material,

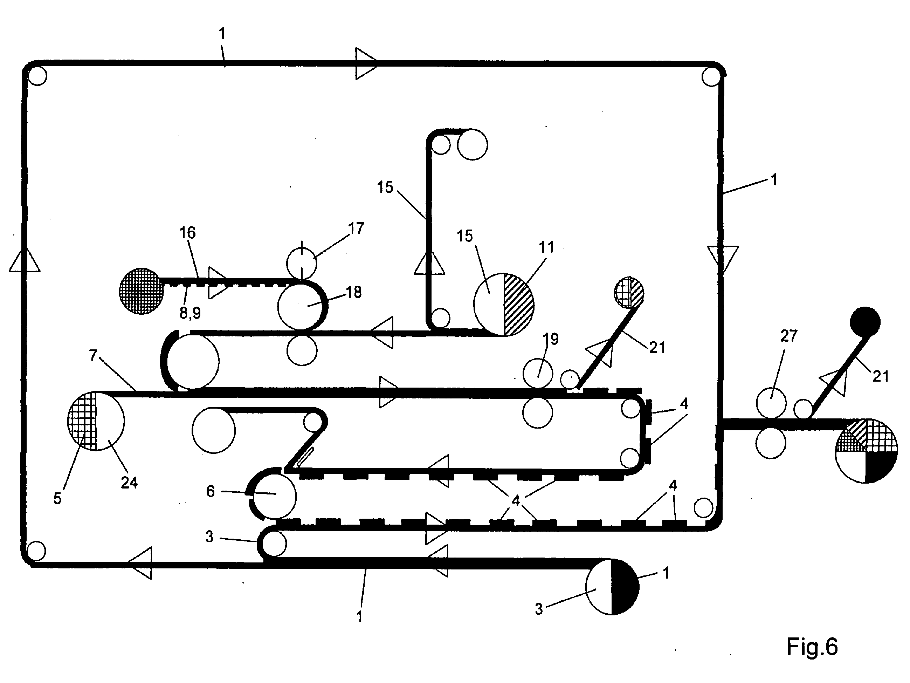

- Figur 6 zeigt: den gesamten Prozess der Herstellung eines selbstklebenden RFID-Etiketts.

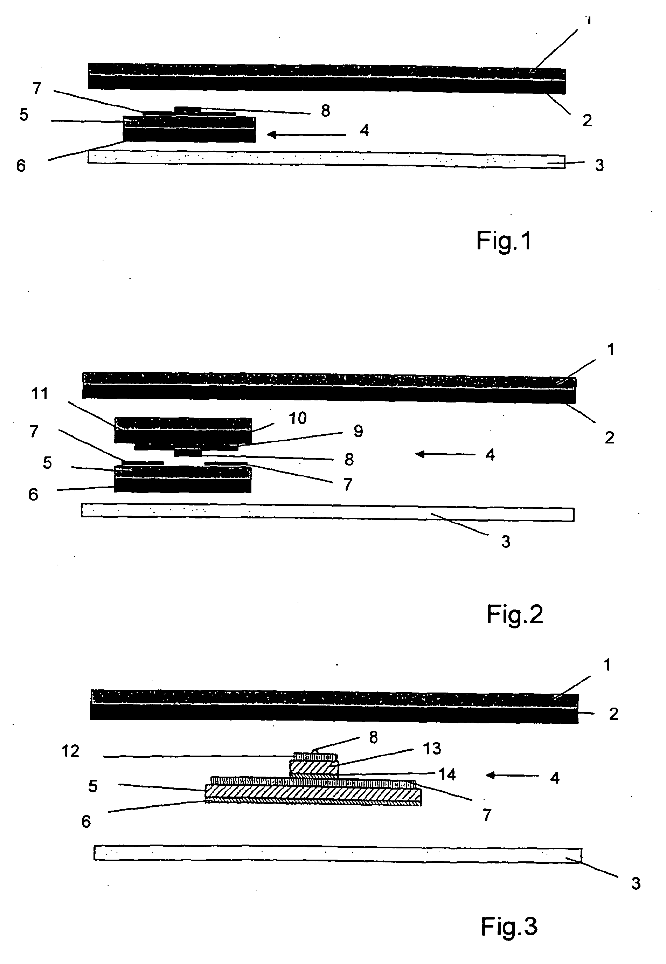

Wie in Figur 1 dargestellt, baut sich ein selbstklebendes RFID-Etikett nach der Erfindung aus mehreren Schichten auf. Die oberste Schicht wird von einem bedruckbaren bahn- oder bogenförmigen Deckmaterial 1 gebildet, das an seiner Rückseite mit einer Haftkleberschicht 2 versehen ist. Die unterste Schicht wird von einem Trägermaterial 3 gebildet, beispielsweise einem silikonisierten Papier, das die Haftkleberschicht 2 des Deckmaterials 1 abdeckt. Zum Freilegen der Haftkleberschicht 2 vor dem Aufkleben eines Etiketts, ist das Trägermaterial von der Haftkleberschicht 2 abziehbar. Zwischen dem Deckmaterial 1 und dem Trägermaterial 3 ist ein RFID-Inlay 4 angeordnet, das mit seiner Oberseite an der Haftkleberschicht 2 des Deckmaterials 1 festgeklebt ist.

Bei allen Ausführungsformen besteht das RFID-Inlay 4 aus einem bahn- oder bogenförmigen Inlay-Material 5, das auf seiner Rückseite mit einer Haftkleberschicht 6 versehen ist. Auf der Oberseite des Inlay-Materials ist eine RFID-Antenne 7 angeordnet, die bevorzugt auf das Inlay-Material 5 aufgedruckt ist. Ebenfalls auf der Oberseite des Inlay-Materials ist ein RFID-Chip 8 angeordnet, der mit der RFID-Antenne einen Transponder bildet.

Bei der Ausführungsform nach Figur 2 ist der RFID-Chip 8 als Chipmodul 8, 9 mit seinen elektrischen Anschlusskontakten 9 galvanisch verbunden. Das Chipmodul 8, 9 ist mittels einer Klebeschicht 10 auf einem Interposer-Material 11 befestigt. Das Interposer-Material 11 ist an der Haftkleberschicht 2 des Deckmaterials 1 festgeklebt. Das Chipmodul 8, 9 liegt mit seinen Kontakten 9 auf dem Inlay-Material 5 so auf, dass die sich auf dem Inlay-Material 5 befindliche RFID-Antenne 7 in elektrischen Kontakt mit den Anschlusskontakten 9 des Chipmoduls 8, 9 steht.

Bei der Ausführungsform nach Figur 3 wird ein Chipmodul verwendet, das aus dem RFID-Chip 8 und einer mit dem Chip 8 elektrisch, insbesondere galvanisch, verbundenen Koppelantenne 12 besteht. Die Koppelantenne 12 mit dem Chip 8 befindet sich auf der Oberseite eines Trägermaterials 13, das auf seiner Unterseite eine Klebstoffschicht 14 aufweist. Mit der Klebstoffschicht 14 ist das Trägermaterial 13 mit der Koppelantenne und dem Chip 8 auf der RFID-Antenne 7 festgeklebt. Dabei sind die RFID-Antenne 7 und die Koppelantenne 12 so zueinander positioniert, dass sie induktiv gekoppelt sind. Auch bei dieser Ausführungsform sind die Transponder-Elemente 8, 12, 7 auf dem Inlay-Material 5 befestigt, das an seiner Rückseite eine Haftkleberschicht 6 aufweist.

Wesentlich für die Erfindung ist, dass für das Inlay-Material 5, einschließlich dessen Haftkleberschicht 6, dasselbe Material verwendet wird, wie für das Deckmaterial 1 mit Haftkleberschicht 2 des Etiketts. Dies hat zum Einen den Vorteil, dass für das Inlay dasselbe Deckmaterial mit Haftkleberschicht verwendet werden kann. Ein weiterer Vorteil besteht darin, dass beim fertigen Etikett nach dem Abziehen auf der Unterseite eine einheitliche Klebeschicht vorliegt, da die Haftkleberschicht 2 der Haftkleberschicht 6 entspricht.

In den Figuren 4 bis 5 sind verschiedene Verfahrensstufen bei der Herstellung eines selbstklebenden RFID-Etiketts dargestellt. Figur 6 zeigt das vollständige Verfahren.

Figur 4 zeigt die Herstellung von so genannten Interposerlabels als Vorstufe für ein RFID-Inlay, wie es bei der Herstellung eines Etiketts nach Figur 2 verwendet wird.

Das bahnförmige Interposer-Material weist eine Deckschicht 11 auf, die an ihrer Unterseite mit einer Haftkleberschicht versehen ist, die von einem abziehbaren Trägermaterial 15, beispielsweise aus silikonisierten Papier, abgedeckt wird. Das Interposer-Material wird von einer Rolle abgezogen, dabei wird das Trägermaterial 15 von der Deckschicht 11 gelöst und getrennt geführt. Der inneren, mit einer Haftkleberschicht versehenen Seite der Deckschicht 11 werden RFID-Chipmodule 8, 9 zugeführt. Diese sind mit Abstand voneinander auf einer Trägerfolie 16 angeordnet und werden ebenfalls von einer Rolle abgezogen. Die RFID-Chipmodule 8, 9 werden von einem Messer 17 abgetrennt und von einer Saugtrommel 18 auf die Kleberschicht der bahnförmigen Deckschicht 11 aufgelegt. Anschließend wird das Trägermaterial 15 wieder auf die Haftkleberschicht der bahnförmigen Deckschicht 11 aus Interposer-Material aufgelegt. Von einer Stanzeinrichtung 19 werden anschließend die einzelnen Interposer-Labels 20 aus der bahnförmige Deckschicht 11 ausgestanzt und das Trägermaterial 15 mit den darauf befindlichen Chipmodulen 8, 9 wird zu einer Rolle aufgewickelt. Das beim Stanzen anfallende überflüssige Material 21 wird entfernt.

In Figur 5 ist dargestellt, wie RFID-Inlays hergestellt werden, ohne dass das Interposer-Material mit dem Chipmodul zwischengespeichert wird.

Die RFID-Chipmodule 8, 9 werden, wie bei der Ausführungsform nach Figur 4 beschrieben, auf einem streifenförmigen Material 16 antransportiert und von einem Messer 17 von diesem abgetrennt und von einer Saugtrommel übernommen. Das Interposer-Material, bestehend aus einer mit einer Haftkleberschicht versehenen Deckschicht 11, die von einer Trägerschicht 15 abgedeckt ist, wird ebenfalls von einer Rolle angezogen. Nach dem Abziehen wird zunächst die Trägerschicht 15 entfernt, so dass die Haftkleberschicht freiliegt. Auf die Haftkleberschicht der Deckschicht 11 werden von der Saugtrommel 18 die RFID-Chipmodule 8, 9 in dem erforderlichen Abstand voneinander aufgelegt. Anschließend werden die Chipmodule 8, 9 mit dem Antennen-Material zusammengeführt. Das Antennen-Material besteht aus einer Deckschicht 23 mit aufgedruckten RFID-Antennen und einer Haftkleberschicht an der Rückseite, die von einem Trägermaterial 24 abgedeckt ist. Das Interposer-Material mit den aufgeklebten Chipmodulen 8, 9 wird von einer Umlenkrolle 22 auf die Antennenschicht 23 aufgeklebt. Anschließend werden von der Stanzeinrichtung 19 die einzelnen Inlays aus dem Deckmaterial 11, 23 ausgestanzt. Das überflüssige Stanzgitter 21 wird entfernt. Auf dem zu einer Rolle aufgewickelten Trägermaterial 24 befinden sich nun mit Abstand abziehbare Inlays, die aus dem Deckmaterial 11, 23 und darauf befindlichen RFID-Antennen 7 und RFID-Chipmodule 8, 9 bestehen.

In Figur 6 ist die komplette Herstellung eines selbstklebenden RFID-Etiketts dargestellt:
Das Etiketten-Material mit dem Deckmaterial 1 und dem Trägermaterial 3 wird von einer Rolle abgezogen. Anschließend wird das Trägermaterial 3 von dem Deckmaterial 1 mit der Klebeschicht 2 getrennt. Auf das Trägermaterial 3 werden anschließend RFID-Inlays 4 von einer Übergabetrommel 6 in den erforderlichen Abstand aufgelegt und festgeklebt. Die RFID-Inlays 4 wurden vorher nach dem in Figur 5 beschriebenen Verfahren hergestellt.

Es werden zunächst auf streifenförmigem Material 16 angeordnete RFID-Chipmodule 8, 9 durch Abschneiden vereinzelt und von einer Übergabetrommel 18 auf die Innenseite der Deckschicht 11 von Interposer-Material geklebt. Die Deckschicht 11 mit den darauf befindlichen Chipmodule 8, 9 wird anschließend mit dem Inlay-Material 5 zusammengeführt, auf dessen Oberseite die Antennen 7 aufgedruckt sind. Nach der Erfindung besteht das Inlay-Material 5 aus dem gleichen Material, wie das Etiketten-Material 1. Nach dem die Chipmodule mit den Chips 8 auf den Antennen 7, also auf dem Inlay-Material 5, befestigt sind, werden die einzelnen Inlays 4 von der Stanzeinrichtung 19 abgetrennt, wobei das Trägermaterial 24 nicht durchgetrennt wird. Das Stanzgitter 21 des Materials 5 wird entfernt. Die Trägerschicht 24 trägt nun einzelne RFID-Inlays 4, die anschließend mittels eines Etikettenspenders von dem Trägermaterial 24 gelöst und der Übergabetrommel 6 übergeben werden. Diese legt sie auf die Oberseite des Trägermaterials 3 des Etiketts. Anschließend wird das Trägermaterial 3 wieder mit dem Deckmaterial 1 zusammengeführt, so dass sich die Inlays zwischen dem Deckmaterial 1 und dem Trägermaterial 3 befinden. Eine Stanzeinrichtung 27 stanzt die einzelnen Etiketten aus dem Material aus, wobei das Trägermaterial 3 nicht zerschnitten wird. Die überflüssigen Stanzgitter 21 werden wiederum entfernt und das fertiggestellte Etiketten-Material wird zu einer Rolle aufgewickelt.

## Patentansprüche

1. Selbstklebendes RFID-Etikett mit
- einem bedruckbaren, bahn- oder bogenförmigen Deckmaterial (1), das an seiner Rückseite mit einer Haftkleberschicht (2) versehen ist,
- einem Trägermaterial (3), das die Haftkleberschicht (2) des Deckmaterials (1) abdeckt und das abziehbar ist, und
- einem RFID-Inlay (4),
o das aus einem bogen- oder bahnförmigen, auf der Rückseite mit einer Haftkleberschicht (6) versehenen Inlay-Material (5) besteht, auf dessen Oberseite ein RFID-Chip (8) und eine RFID-Antenne (7) angeordnet sind, und
o das mit seiner Oberseite an der Haftkleberschicht (2) des Deckmaterials (1) festgeklebt zwischen dem Deckmaterial (1) und dem Trägermaterial (3) angeordnet ist,
- **dadurch gekennzeichnet, dass** für das Inlay-Material (5) des RFID-Inlays (4), einschließlich dessen Haftkleberschicht, dasselbe Material verwendet wird, wie für das Deckmaterial (1) mit Haftkleberschicht (2) des Etiketts.

2. Selbstklebendes RFID-Etikett nach Anspruch 1, **dadurch gekennzeichnet, dass** der RFID-Chip (8) als Chipmodul mit seinen elektrischen Anschlusskontakten (9) mittels einer Klebeschicht (10) auf einem bahn- oder bogenförmigen Interposer-Material (11) befestigt ist, wobei das Interposer-Material (11) an der Haftkleberschicht (2) des Deckmaterials (1) festgeklebt ist und der RFID-Chip (8) mit seinen Kontakten (9) auf dem Inlay-Material (5) so aufliegt, dass die auf dem Inlay-Material (5) befindliche RFID-Antenne (7) in elektrischen Kontakt mit den Anschlusskontakten (9) des RFID-Chips (8) stehen.

3. Selbstklebendes RFID-Etikett nach Anspruch 1, **dadurch gekennzeichnet, dass** oberhalb der RFID-Antenne (7) und mit geringem Abstand von dieser ein Chipmodul angeordnet ist, das RFID-Chip (8) und einer mit dem RFID-Chip (8) elektrisch verbundenen Koppelantenne (12) besteht die auf einem Trägermaterial (13) angeordnet sind, wobei die RFID-Antenne (7) und die Koppelantenne (12) so zueinander positioniert sind, dass sie induktiv gekoppelt sind.

4. Selbstklebendes RFID-Etikett nach einem der Ansprüche 1 bis 3, **dadurch gekennzeichnet, dass** die RFID-Antenne (7) auf der Oberseite des Inlay-Materials (5) aufgedruckt ist.

5. Verfahren zur Herstellung eines selbstklebenden RFID-Etiketts nach einem der Ansprüche 1 bis 4, wobei zwischen einem bahn- oder bogenförmigen Deckmaterial (1), das an seiner Rückseite eine Haftkleberschicht (2) aufweist, und einem die Haftkleberschicht (2) auziehbar abdeckenden Trägermaterial (3) ein RFID-Inlay (4) eingelegt wird, das aus einem Inlay-Material (5) besteht, welches auf seiner Oberseite eine RFID-Antenne (7) und einen RFID-Chip (8) aufweist und das auf seiner Rückseite mit einer Haftkleberschicht (6) versehen ist, wobei für das Inlay-Material (5) mit der Haftkleberschicht (6) dasselbe Material verwendet wird, wie für das Deckmaterial (1) mit der Haftkleberschicht (2) des Etiketts.

6. Verfahren nach Anspruch 5, **dadurch gekennzeichnet, dass** zur kontinuierlichen Herstellung der RFID-Inlays (4) Chipmodule verwendet werden, die jeweils aus einem RFID-Chip (8) mit zugehörigen elektrischen Anschlusskontakten (9) bestehen, die mit Abstand voneinander auf einem streifenförmigen Trägermaterial (16) angeordnet sind.

7. Verfahren nach Anspruch 6, **dadurch gekennzeichnet, dass** jedes Chipmodul eine mit dem RFID-Chip (8) elektrisch, insbesondere galvanisch, verbundene Koppelantenne (12) enthält.

8. Verfahren nach Anspruch 6 oder 7, **dadurch gekennzeichnet, dass** zur Herstellung der RFID-Inlays (4) jeweils ein Chipmodul auf einer RFID-Antenne (7) befestigt wird, die auf der Oberseite von streifenförmigem Inlay-Material (5) angebracht, insbesondere aufgedruckt, sind, wobei die Verbindung zwischen RFID-Chip (8) und RFID-Antenne (7) entweder durch direkten elektrischen, insbesondere galvanischen oder kapazitiven, Kontakt, oder durch induktive Kopplung hergestellt wird.

9. Verfahren nach Anspruch 8, **dadurch gekennzeichnet, dass** die Chipmodule den RFID-Antennen (7) entweder einzeln oder gemeinsam mit Abstand auf Streifen angeordnet zugeführt werden.

10. Verfahren nach Anspruch 9, **dadurch gekennzeichnet, dass** die RFID-Inlays (4) vor dem Einlegen zwischen dem Deckmaterial (1) und dem Trägermaterial (3) der Etiketten durch Stanzen vereinzelt werden.

## Claims

1. Self-adhesive RFID label comprising:
- a printable web- or sheet-type covering material (1), which is provided with a pressure-sensitive adhesive layer (2) on its rear side,
- a carrier material (3), which covers the pressure-sensitive adhesive layer (2) of the covering material (1) and which is strippable, and
- an RFID inlay (4),
○ which is composed of a sheet- or web-type inlay material (5) which is provided with a pressure-sensitive adhesive layer (6) on the rear side, and on the top side of which an RFID chip (8) and an RFID antenna (7) are arranged, and
○ which is arranged between the covering material (1) and the carrier material (3) in a manner fixedly adhered by its top side on the pressure-sensitive adhesive layer (2) of the covering material (1),
**characterized in that** the same material is used for the inlay material (5) of the RFID inlay (4), including the pressure-sensitive adhesive layer thereof, as for the covering material (1) with pressure-sensitive adhesive layer (2) of the label.

2. Self-adhesive RFID label according to Claim 1, **characterized in that** the RFID chip (8) is fixed as a chip module by its electrical connection contacts (9) on a web- or sheet-type interposer material (11) by means of an adhesive layer (10), wherein the interposer material (11) is fixedly adhered on the pressure-sensitive adhesive layer (2) of the covering material (1) and the RFID chip (8) bears with its contacts (9) on the inlay material (5) in such a way that the RFID antenna (7) situated on the inlay material (5) is in electrical contact with the connection contacts (9) of the RFID chip (8).

3. Self-adhesive RFID label according to Claim 1, **characterized in that** a chip module is arranged above the RFID antenna (7) and at a small distance from the latter, said chip module comprising RFID chip (8) and a coupling antenna (12) electrically connected to the RFID chip (8), which are arranged on a carrier material (13), wherein the RFID antenna (7) and the coupling antenna (12) are positioned with respect to one another in such a way that they are inductively coupled.

4. Self-adhesive RFID label according to any of Claims 1 to 3, **characterized in that** the RFID antenna (7) is printed on the top side of the inlay material (5).

5. Method for producing a self-adhesive RFID label according to any of Claims 1 to 4, wherein an RFID inlay (4) is introduced between a web- or sheet-type covering material (1), which has a pressure-sensitive adhesive layer (2) on its rear side, and a carrier material (3) that covers the pressure-sensitive adhesive layer (2) in strippable fashion, said RFID inlay being composed of an inlay material (5) which has an RFID antenna (7) and an RFID chip (8) on its top side and which is provided with a pressure-sensitive adhesive layer (6) on its rear side, wherein the same material is used for the inlay material (5) with the pressure-sensitive adhesive layer (6) as for the covering material (1) with the pressure-sensitive adhesive layer (2) of the label.

6. Method according to Claim 5, **characterized in that** for continuously producing the RFID inlays (4), chip modules are used which in each case comprise an RFID chip (8) with associated electrical connection contacts (9), which are arranged at a distance from one another on a strip-type carrier material (16).

7. Method according to Claim 6, **characterized in that** each chip module contains a coupling antenna (12) that is electrically, in particular galvanically, connected to the RFID chip (8).

8. Method according to Claim 6 or 7, **characterized in that** for producing the RFID inlays (4), a respective chip module is fixed on an RFID antenna (7), which are fitted, in particular printed, on the top side of strip-type inlay material (5), wherein the connection between RFID chip (8) and RFID antenna (7) is produced either by direct electrical, in particular galvanic or capacitive, contact or by inductive coupling.

9. Method according to Claim 8, **characterized in that** the chip modules are supplied to the RFID antennas (7) either individually or jointly in a manner arranged at a distance on strips.

10. Method according to Claim 9, **characterized in that** the RFID inlays (4) are separated by stamping prior to introduction between the covering material (1) and the carrier material (3) of the labels.

## Revendications

1. Étiquette RFID autoadhésive, comprenant :
- un matériau de recouvrement en forme de bande ou de feuille (1), qui est muni sur sa face arrière d'une couche adhésive sensible à la pression (2),
- un matériau de support (3) qui recouvre la couche adhésive sensible à la pression (2) du matériau de recouvrement (1) et qui est amovible, et
- un insert RFID (4),
- qui est constitué d'un matériau d'insert (5) muni sur sa face arrière d'une couche adhésive sensible à la pression (6) en forme de feuille ou de bande et sur la face supérieure duquel sont disposées une puce RFID (8) et une antenne RFID (7), et
- qui est disposé de manière à ce qu'il soit collé par sa face supérieure à la couche adhésive sensible à la pression (2) du matériau de recouvrement (1) entre le matériau de recouvrement (1) et la matériau de support (3),
- **caractérisée en ce qu'**on utilise pour le matériau d'insert (5) de l'insert RFID (4), y compris pour sa couche adhésive sensible à la pression, le même matériau que pour le matériau de recouvrement (1) muni de la couche adhésive sensible à la pression (2) de l'étiquette.

2. Étiquette RFID autoadhésive selon la revendication 1, **caractérisée en ce que** la puce RFID (8) est montrée sous la forme d'un module de puce à l'aide de ses contacts de raccordement électrique (9) au moyen d'une couche adhésive (10) sur un matériau d'interposition (11) en forme de bande ou de feuille, le matériau d'interposition (11) étant collé à la couche adhésive sensible à la pression (2) du matériau de recouvrement (1) et la puce RFID (8) reposant par ses contacts (9) sur le matériau d'insert (5) de manière à ce que l'antenne RFID (7) se trouvant sur le matériau d'insert (5) soit en contact électrique avec les contacts de raccordement (9) de la puce RFID (8).

3. Étiquette RFID autoadhésive selon la revendication 1, **caractérisée en ce qu'**au-dessus de l'antenne RFID (7) et à une faible distance de celle-ci, est disposé un module de puce qui comporte la puce RFID (8) et une antenne de couplage (12) électriquement connectée à la puce RFID (8), celles-ci étant disposées sur un matériau de support (13), l'antenne RFID (7) et l'antenne de couplage (12) étant positionnées l'une par rapport à l'autre de telle manière qu'elles soient couplées par induction.

4. Étiquette RFID autoadhésive selon l'une quelconque des revendications 1 à 3, **caractérisée en ce que** l'antenne RFID (7) est imprimée sur la face supérieure du matériau d'insert (5).

5. Procédé de fabrication d'une étiquette RFID autoadhésive selon l'une quelconque des revendications 1 à 4, dans lequel un insert RFID (4) est inséré entre un matériau de recouvrement en forme de bande ou de feuille (1) qui présente sur sa face arrière une couche adhésive sensible à la pression (2) et un matériau de support (3) recouvrant de manière amovible la couche adhésive sensible à la pression (2), lequel insert RFID (4) est constitué d'un matériau d'insert (5) qui présente sur sa face supérieure une antenne RFID (7) et une puce RFID (8) et qui est muni sur sa face arrière d'une couche adhésive sensible à la pression (6), dans lequel on utilise pour le matériau d'insert (5) muni de la couche adhésive sensible à la pression (6) le même matériau que pour le matériau de recouvrement (1) muni de la couche adhésive sensible à la pression (2) de l'étiquette.

6. Procédé selon la revendication 5, **caractérisé en ce que**, pour la fabrication continue des inserts RFID (4), on utilise des modules de puces dont chacun est constitué d'une puce RFID (8) munie de contacts de raccordement électrique (9) associés qui sont disposés de manière espacée les uns des autres sur un matériau de support en forme de ruban (16).

7. Procédé selon la revendication 6, **caractérisé en ce que** chaque module de puce comporte une antenne de couplage (12) connectée électriquement, notamment de manière galvanique, à la puce RFID (8).

8. Procédé selon la revendication 6 ou 7, **caractérisé en ce que**, pour la fabrication de l'insert RFID (4), des modules de puce respectifs sont montés sur une antenne RFID (7) qui est placée sur la face supérieure d'un matériau d'insert (5) en forme de ruban, notamment par impression, dans lequel la connexion entre la puce RFID (8) et l'antenne RFID (7) est réalisée soit par contact électrique direct, notamment galvanique ou capacitif, soit par couplage inductif.

9. Procédé selon la revendication 8, **caractérisé en ce que** les modules de puces alimentent les antennes RFID (7) soit individuellement soit conjointement en étant espacés d'une certaine distance sur des rubans.

10. Procédé selon la revendication 9, **caractérisé en ce que** les inserts RFID (4) sont détachés par poinçonnage savant l'insertion entre le matériau de recouvrement (1) le matériau de support (3) des étiquettes.
